# EUROPÄISCHE PATENTSCHRIFT

(11) **EP 2 250 351 B1**
(45) Veröffentlichungstag und Bekanntmachung des Hinweises auf die Patenterteilung: **29.04.2015**
(21) Anmeldenummer: 09719861.8
(22) Anmeldetag: 02.02.2009
(51) Int. Cl.: F01N 3/20

(54) **DOSIERSYSTEM UND VERFAHREN ZUR EINDÜSUNG EINER HARNSTOFFLÖSUNG IN DEN ABGASSTROM EINER BRENNKRAFTMASCHINE**
METERING SYSTEM AND METHOD FOR INJECTING A UREA SOLUTION INTO THE EXHAUST GAS FLOW OF AN INTERNAL COMBUSTION ENGINE
SYSTÈME DE DOSAGE ET PROCÉDÉ POUR L'INJECTION D'UNE SOLUTION D'URÉE DANS LE FLUX DE GAZ D'ÉCHAPPEMENT D'UN MOTEUR À COMBUSTION INTERNE

(30) Priorität: 12.03.2008 DE 102008013960
(43) Veröffentlichungstag der Anmeldung: 17.11.2010
(73) Patentinhaber: Albonair GmbH, 44263 Dortmund (DE)
(72) Erfinder: HÜTHWOHL, Georg, 59494 Soest (DE)
(74) Vertreter: Patentanwaltskanzlei Methling
(86) Internationale Anmeldenummer: PCT/EP2009/000664
(87) Internationale Veröffentlichungsnummer: WO 2009/112129

(56) Entgegenhaltungen:
- EP-A- 0 849 443
- WO-A-02/24312
- JP-A- 2007 100 672
- US-B1- 6 273 120

## Beschreibung

Die Erfindung betrifft ein Dosiersystem zur Eindüsung einer Harnstofflösung in den Abgasstrom eines Verbrennungsmotors zur selektiven katalytischen Reduktion, wobei das Dosiersystem mit einem Harnstofflösungstank verbindbar ist, aus dem Harnstofflösung entnehmbar ist, und wobei das Dosiersystem mit einer Druckluftversorgung verbindbar ist, wobei das Dosiersystem zumindest eine Düse aufweist, durch die mittels Druckluft die Harnstofflösung in den Abgasstrom eindüsbar ist. Des Weiteren betrifft die Erfindung ein Verfahren zur Steuerung der Eindüsung einer Harnstofflösung mittels Druckluft in den Abgasstrom eines Verbrennungsmotors zur selektiven katalytischen Reduktion.

Aus der WO 02/24312 A1 ist ein derartiges Dosiersystem bekannt, bei dem Druckluft und Harnstoff in einer Mischkammer zusammengeführt werden, um in der Mischkammer ein Aerosol zu bilden, welches in das Abgas eingeleitet wird.

SCR- Katalysatoren werden eingesetzt um die Stickoxydemission von Dieselmotoren zu vermindern. Hierzu wird ein Reduktionsmittel in das Abgassystem mit einer Dosiervorrichtung eingedüst. Als Reduktionsmittel dient Ammoniak.

Da das mitführen von Ammoniak in Fahrzeugen sicherheitskritisch ist, wird Harnstoff in wässriger Lösung mit üblicherweise 32,5 % Harnstoffanteil eingesetzt. Im Abgas zersetzt sich der Harnstoff bei Temperaturen oberhalb von 150° Celsius in gasförmiges Ammoniak und CO₂. Parameter für die Zersetzung des Harnstoffes sind im wesentlichen Zeit (Verdampfungs- und Reaktionszeit), Temperatur und Tröpfchengröße der eingedüsten Harnstofflösung. In diesen SCR- Katalysatoren wir durch selektive katalytische Reduktion (englisch selective catalyic reduction, SCR) der Ausstoß von Stickoxyden um etwa 90 % reduziert.

Es sind diverse Systeme zur Eindüsung von Harnstoff bekannt. Das Eindüsen des Harnstoffes kann durch Druckluft unterstützt werden. Die Druckluft dient als Energielieferant. Dies ist zum Erreichen von kleinen Tröpfchen von Vorteil.

Bei hohen Temperaturen oberhalb etwa 200° Celsius kann sich der Harnstoff zersetzen und schwer lösbare Ablagerungen bilden. Diese Ablagerungen können die Düsen verstopfen. Die Druckluft kann daher verwendet werden um die Harnstoffdüse bei hohen Abgastemperaturen zusätzlich zu kühlen. Die Harnstofflösung wird mittels eines Dosiersystems dosiert, in den Abgasstrom eingespritzt und sorgt im SCR- Katalysator für die gewünschte chemische Reaktion. Hierbei werden die Stickoxyde in Stickstoff und Wasserdampf umgewandelt.

Bei den in Kraftfahrzeugen derzeit eingesetzten Systemen werden Druckluft und Harnstoff in einer Mischkammer zusammengeführt und über eine einfache Lochdüse in das Abgas eingesprüht. Der Luftmassenstrom ist hierbei auf einen konstanten Wert eingestellt um ein Rückströmen des Harnstoffes in den Luftstrom vor der Mischkammer zu vermeiden. Hierdurch wird eine definierte Grenze zwischen Harnstoff führenden Bereichen und Harnstoff freien Bereichen dargestellt und eine Kristallbildung des Harnstoffs im Mischsystem vermieden. Bereiche in dem Dosiersystem in die Harnstoff nur zeitweise eintritt, müssen vermieden werden, da hier die Gefahr besteht, dass die wässrige Harnstofflösung trocknet, der Harnstoff Kristalle bildet und die Luftkanäle bzw. Harnstoffkanäle verstopfen.

Nachteilig bei den bekannten Systemen ist die Verstopfungsneigung in Folge einer Kristallbildung durch die Harnstoffe. Derartige Kristalle können mittels flüssigen Harnstoffes wieder gelöst werden. Jedoch kann ein zumindest zeitweises Verstopfen der Systeme nicht vermieden werden.

Nutzfahrzeuge besitzen im Allgemeinen ein Druckluftsystem für die Bremsanlage sowie einige zusätzliche Verbraucher. Der Luftdruck der Systeme liegt meist oberhalb von 10 bar. Bei den bekannten Systemen wird die Druckluft dieser Druckluftsysteme der Nutzfahrzeuge ebenfalls genutzt für das Zerstäuben, bzw. Eindüsen des Harnstoffes mittels der bekannten Dosiersysteme.

Nachteilig ist dabei jedoch, dass durch den kontinuierlichen Luftverbrauch des Dosiersystems ein höherer Kraftstoffverbrauch des Motors die Folge ist. Ebenfalls nachteilig ist, dass die Luftversorgung an den zusätzlichen Verbrauchern in Form des Harnstoffdosiersystems angepasst werden muss. Besonders nachteilig ist dabei, dass vielfach Kompressoren mit erhöhter Leistung erforderlich werden.

Die Aufgabe der Erfindung ist es, ein Dosiersystem mit Unterstützung der Zerstäubung durch Druckluft zur Verfügung zu stellen, bei dem der Druckluftverbrauch minimiert ist.

Diese Aufgabe wird erfindungsgemäß durch ein Dosiersystem gemäß Anspruch 1 gelöst, sowie durch ein Verfahren zur Steuerung der Eindüsung einer Harnstofflösung gemäß Anspruch 14 gelöst. Vorteilhafte Ausgestaltungen der Erfindung sind in den jeweiligen abhängigen Ansprüchen angegeben.

Besonders vorteilhaft bei dem Dosiersystem zur Eindüsung einer Harnstofflösung in den Abgasstrom eines Verbrennungsmotors zur selektiven katalytischen Reduktion, wobei das Dosiersystem mit einem Harnstofflösungstank verbindbar ist, aus dem Harnstofflösung entnehmbar ist und wobei das Dosiersystem mit einer Druckluftversorgung verbindbar ist, wobei das Dosiersystem zumindest eine Düse aufweist durch die mittels Druckluft die Harnstofflösung in den Abgasstrom eindüsbar ist, ist es, dass das Dosiersystem ein Luftventil aufweist, mittels dessen der Druck, und /oder die Luftmenge, und / oder die Ventilöffnungszeiten der Druckluftversorgung regelbar sind und dass zwischen dem Luftventil und der Düse ein Sensor zur Messung des Druckes und / oder der Luftmenge in der Druckluftversorgung angeordnet ist.

Es wird somit bei dem erfindungsgemäßen Dosiersystem zur Injektion oder Eindüsung einer Harnstofflösung in den Abgasstrom der Luftdruck der Druckluftversorgung überwacht und entsprechend den Anforderungen geregelt. Besonders vorteilhaft bei dem erfindungsgemäßen Verfahren zur Steuerung der Eindüsung einer Harnstofflösung mittels Druckluft in den Abgasstrom eines Verbrennungsmotors zur selektiven katalytischen Reduktion ist es, dass die zur Zerstäubung der Harnstofflösung zugeführte Druckluftmenge in jedem Betriebspunkt in Abhängigkeit der Betriebsparameter Abgastemperatur und Abgasmassenstrom gesteuert und auf die jeweils erforderliche Mindestluftmenge abgesenkt wird, so dass die Tröpfchenqualität der eingedüsten Harnstofflösung für die Wirkung des Katalysators ausreicht.

Die Druckluft wird somit bei dem erfindungsgemäßen Dosiersystem und dem erfindungsgemäßen Verfahren zur Steuerung der Eindüsung der Harnstofflösung geregelt über ein entsprechendes Regelventil zugeführt. Die zugeführte Luftmenge wird in jedem Betriebspunkt soweit angesenkt, dass die Tröpfchenqualität für die Wirkung des Katalysators gerade noch ausreichend ist. Dies erfolgt durch die Anpassung der Dosierluftmenge in jedem Betriebspunkt des Motors in Abhängigkeit der Betriebsparameter. Als Betriebsparameter werden dabei insbesondere die Abgastemperatur und / oder der Abgasmassenstrom erfasst und der Regelung der Luftmenge zugeführt, d.h. dass die Luftmenge in Abhängigkeit der aktuellen Motorbetriebspunkte jeweils nachgeführt wird.

Eine Verminderung der Luftmenge in der Düse bedeutet eine Verschlechterung der Tröpfchenqualität, d.h. größere Tröpfchendurchmesser. Die minimal erforderliche Tröpfchenqualität ist abhängig von dem in dem jeweiligen Betriebspunkt geforderten Katalysatorwirkungsgrad. Die Druckluftmenge wird der jeweiligen Anforderung entsprechend auf das erforderliche Minimum abgesenkt. Hierdurch wird der Verbrauch des Motors bei Kraftfahrzeugen spürbar abgesenkt.

In einer besonders bevorzugten Ausführungsform des Dosiersystems handelt es sich bei dem Luftventil um ein Proportionalregelventil. Durch die Verwendung eines Proportionalregelventiles ist es möglich, die Luftmenge der Druckluftversorgung, d.h. die Luftmenge die zur Eindüsung der Harnstofflösung in den Abgasstrom zugeführt wird, exakt zu regeln.

Vorzugsweise handelt es sich bei dem Sensor, der zwischen dem Luftventil und der Düse angeordnet ist, um einen Drucksensor, mittels dessen der Druck in dem Druckluftsystem hinter dem Luftventil überwacht wird.

In einer besonders bevorzugten Ausführungsform erhält das Dosiersystem ein Signal des Abgasmassenstromes aus der Motorsteuerung. Der Abgasmassenstrom wird von dem Motorsteuergerät aus angesaugtem Luftmassenstrom und Kraftstoffmassenstrom berechnet und als Signal des Abgasmassenstromes bereitgestellt. Alternativ weist das Dosiersystem einen Sensor zur Messung des Abgasmassenstromes auf. Vorzugsweise weist das Dosiersystem alternativ oder kumulativ einen Sensor zur Messung der Abgastemperatur auf.

Aus dem Abgasmassenstromsignal und / oder der Abgastemperatur ist es möglich, die in Abhängigkeit des jeweiligen Motorbetriebspunktes vorliegenden Betriebsparameter Abgastemperatur und / oder Abgasmassenstrom zu erfassen und über eine entsprechende Steuerelektronik des Dosiersystems auszuwerten und den Druck und / oder die Luftmenge und / oder die Ventilöffnungszeiten der Druckluftversorgung in Abhängigkeit der gemessenen Betriebsparameter zu regeln.

Die Einflussparameter für die Anpassung der Dosierung der Luftmenge sind insbesondere:
- Abgastemperatur
- Abgasmassenstrom
- Harnstoffmassenstrom
- Erforderlicher Katalysatorwirkungsgrad
- Katalysatorgröße
- Aufbereitungsstrecke zwischen Harnstoffeindosierung und Katalysator

Es ist mit dem erfindungsgemäßen Dosiersystem somit möglich, in jedem einzelnen Betriebspunkt abhängig von den jeweiligen Randbedingungen die Luftmenge zu optimieren.

In einer besonders bevorzugten Ausführungsform weist die Druckluftversorgung ein Drosselventil auf. Durch die Anordnung eines Drosselventils ist es möglich, den Luftdruck in dem Luftdrucksystem vor der Zuführung zur Düse entsprechend abzusenken.

In einer besonders bevorzugten Ausführungsform weist das Dosiersystem eine Dosierpumpe zur Förderung der Harnstofflösung auf. Insbesondere kann es sich bei einer solchen Dosierpumpe um eine steuerbare Dosierpumpe hinsichtlich des geförderten Massenstromes an Harnstofflösung handeln, so dass die Fördermenge an Harnstofflösung dem jeweiligen Betriebspunkt durch eine entsprechende Ansteuerung der Dosierpumpe anpassbar ist.

Vorzugsweise ist zwischen der Harnstoffleistung und einer Leitung der Druckluftversorgung eine Verbindungsleitung angeordnet, wobei die Verbindungsleitung ein Rückschlagventil aufweist.

Um in Dosierpausen die Luftzufuhr vollständig zu unterbrechen ist es erforderlich, den Harnstoff aus den heißen Bereichen zu entfernen um zu vermeiden, dass sich Ablagerungen bilden. Anderenfalls würde der Harnstoff sich bei hohen Temperaturen zersetzen und zu Ablagerungen und somit zu Verstopfungen führen. Durch die Anordnung einer Druckluftleitung, d.h. einer Verbindungsleitung zwischen einer Harnstoffleitung und einer Leitung der Druckluftversorgung, können derartige Ablagerungen verhindert werden, indem die Harnstoffbildung in Dosierpausen mittels Druckluft freigeblasen wird. In diese Verbindungsleitung wird ein Rückschlagventil eingesetzt, dessen Öffnungsdruck oberhalb des sich bei der Dosierung einstellenden Luftdrucks nach dem Luftventil ist.

Im Dosierbetrieb ist dieses Rückschlagventil geschlossen, da der Druck in der Druckluftleitung unterhalb des Öffnungsdruckes des Rückschlagventils liegt. Um die Harnstoffleitung mit Druckluft freizublasen, wird die Harnstoffförderung durch die Dosierpumpe abgestellt und das Luftventil kurzzeitig soweit geöffnet, dass sich der Druck über den Öffnungsdruck des Rückschlagventils erhöht. In Folge der Drossel in der Druckluftleitung ergibt sich ein Druckgefälle in der Dosierleitung und die Druckluft treibt den Harnstoff in das Abgassystem. Die Leitung wird somit freigeblasen. Nach einem kurzzeitigen Luftstoß ist der Harnstoff aus der Dosierdüse ausgeblasen und die Luftzufuhr kann komplett abgeschaltet werden.

Vorzugsweise weist das Dosiersystem einen Druckluftkompressor auf. Mittels eines derartigen Druckluftkompressors ist es möglich, die für das Dosiersystem geforderte Druckluft bereitzustellen, sofern in der Installationsumgebung des Dosiersystems keine oder eine nicht ausreichende Druckluftversorgung vorhanden ist.

Vorzugsweise weist das Dosiersystem ein Steuergerät auf, mittel dessen das Luftventil und / oder ein Drosselventil und / oder eine Dosierpumpe und / oder ein Druckluftkompressor in Anhängigkeit der von dem Sensor oder den Sensoren erfassten Messwerten steuerbar ist.

Durch die Anordnung eines derartigen Steuergerätes, welches eine oder mehrere Komponenten des Dosiersystems in Abhängigkeit der Sensormesswerte, d.h. in Abhängigkeit der aktuellen Betriebsparameter, steuert, ist eine Optimierung des Betriebs des Dosiersystems, d.h. eine Luftoptimierung in besonders vorteilhafter Weise realisierbar. Es ist mittels eines derartigen Steuergerätes somit möglich, die Harnstofffördermenge und die Luftfördermenge in optimaler Weise den aktuellen Betriebsparametern des Verbrennungsmotors und des Katalysators zur selektiv katalytischen Reduktion anzupassen und somit zu regeln.

Vorzugsweise weist das Dosiersystem einen Harnstofflösungstank auf. Dadurch, dass das Dosiersystem selbst einen Harnstofflösungstank aufweist, ist es möglich, das Dosiersystem in entsprechenden Umgebungen nachzurüsten, in denen ein Harnstofflösungstank nicht bereits vorhanden ist.

In einer bevorzugten Ausführungsform weist das Dosiersystem eine Zweistoffdüse auf. Besonders bevorzugt handelt es sich bei der Zweistoffdüse um eine außenmischende Düse.

Das erfindungsgemäße Verfahren zur Steuerung der Eindüsung oder Injektion einer Harnstofflösung mittel Druckluft in dem Abgasstrom eines Verbrennungsmotors zur selektiven katalytischen Reduktion, ist vorzugsweise derart ausgestaltet, dass bei Unterbrechung oder Beendigung der Eindüsung von Harnstofflösung die harnstofflösungführenden Leitungen mittels Druckluft von der Harnstofflösung gereinigt werden.

Das Verfahren ist also vorzugsweise derart ausgestaltet, dass eine Beendigung oder Unterbrechung der Förderung von Harnstofflösung zeitlich vor der Beendigung oder Unterbrechung der Druckluftförderung erfolgt und die Druckluft nach Unterbrechung oder Beendigung der Förderung der Harnstofflösung dazu genutzt wird, die Harnstofflösung führenden Teile mittels der Druckluft zu reinigen. Hierdurch wird der Harnstoff insbesondere aus den heißen Bereichen des Dosiersystems entfernt. Anderenfalls würde der Harnstoff sich bei hohen Temperaturen zersetzen und Ablagerungen bilden und könnte zu Verstopfungen führen.

Um die Harnstoffleitung mit Druckluft freizublasen, wird die Harnstoffförderung durch die Dosierpumpe abgestellt und das Luftregelventil kurzzeitig soweit geöffnet, dass sich der Druck über den Öffnungsdruck eines Rückschlagventils in einer Verbindungsleitung zwischen Harnstoffleitung und Druckluftleitung erhöht. In Folge dessen entsteht ein Druckgefälle in der Dosierleitung, so dass die Druckluft den Harnstoff in das Abgassystem treibt und somit die harnstoffführende Leitung freigeblasen wird. Nach einem kurzzeitigen Luftstoß ist der Harnstoff aus der Dosierdüse ausgeblasen und die Luftzufuhr kann ebenfalls komplett abgeschaltet werden.

Eine Unterbrechung oder Beendigung der Eindüsung von Harnstofflösung kann somit durch Abschaltung einer Dosierpumpe erfolgen.

Vor dem Wiedereinschalten der Dosierung ist es sinnvoll, zunächst die Druckluft auf einen Wert einzustellen der oberhalb der normalen Dosierluftzufuhr ist, um die Düse abzukühlen, bevor der Harnstoff in diese eintritt.

Das Ausblasen des Harnstoffs aus den Leitungen ist ebenfalls vorteilhaft, wenn das Gesamtsystem abgeschaltet wird. Harnstoff friert bei Temperaturen unterhalb von -11 °Celsius ein. Hierbei dehnt sich die Harnstoffwasserlösung um etwa 10% aus. Dies führt zu einem Frostdruck, durch den Komponenten zerstört werden könnten. Daher ist es erforderlich, den Harnstoff aus der Düse auszublasen, bevor das System komplett abgeschaltet wird.

Dies kann insbesondere dadurch erfolgen, dass nach der Beendigung der Harnstoffförderung das Gesamtsystem mittels Druckluft gereinigt wird, d.h. dass der Harnstoff aus dem System mittels Druckluft ausgeblasen wird.

Vorzugsweise erfolgt eine Ansteuerung zumindest einer Dosierpumpe und / oder zumindest eines Druckluftkompressors und / oder zumindest eines Luftregelventils in Abhängigkeit der Betriebsparameter Abgastemperatur und Abgasmassenstrom bei dem erfindungsgemäßen Verfahren zur Steuerung der Eindüsung oder Injektion der Harnstofflösung. Hierzu können mittels eines entsprechenden Steuergerätes die verschieden erfassten Betriebsparameter ausgewertet werden, so dass eine Ansteuerung der Komponenten exakt erfolgen kann.

In den Figuren sind zwei Ausführungsbeispiele eines erfindungsgemäßen Dosiersystems zur Eindüsung einer Harnstofflösung in den Abgasstrom eines Verbrennungsmotors dargestellt und werden nachfolgend erläutert. Es zeigen:
- Figur 1: ein Anlagenschema einer ersten Ausführungsform eines Dosiersystems;
- Figur 2: ein Anlagenschema einer zweiten Ausführungsform eines Dosiersystems.

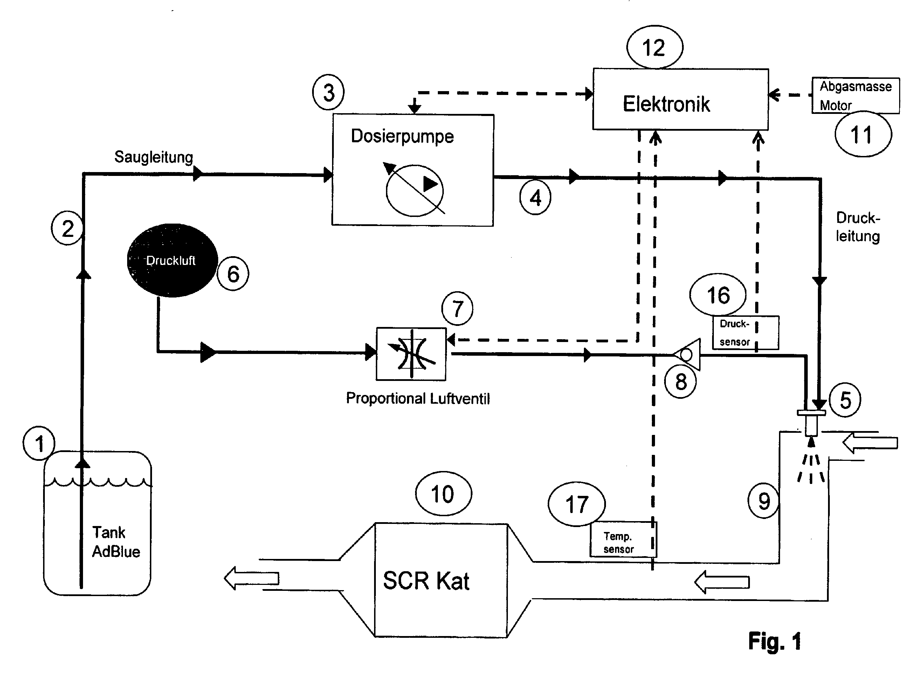

In den Figuren sind mit identischen Bezugszeichen, identische Bauteile und Baugruppen bezeichnet. Figur 1 zeigt die schematische Darstellung einer ersten Ausführungsform des Harnstoffdosiersystems.

Harnstoff wird aus einem Tank 1 über eine Saugleitung 2 von der Dosierpumpe 3 angesaugt. Die Dosierpumpe 3 ist beispielsweise eine Membranpumpe oder eine Kolbenpumpe, die mit jedem Hub eine definierte Menge an Harnstofflösung fördert und somit gleichermaßen dosiert. Über eine Druckleitung 4 wird der Harnstoff zu einer Zweistoffdüse 5 geleitet. Die Zweistoffdüse 5 ist vorzugsweise eine außenmischende Düse, bei der ein Luftstrahl den Harnstoff zerstäubt.

Druckluft wird aus einem Druckluftbehälter 6 zu einem Proportionalluftventil 7 geleitet. Das Proportionalluftventil 7 stellt den Druckstrom ab auf einen durch die Elektronik 12 vorgegeben Wert ein. Eingangsgrößen für die Berechnung dieses Wertes mittels der elektronischen Steuereinheit 12 sind Motordaten wie der Abgasmassenstrom, die von der Motorelektronik übergeben werden. Weiterhin die Abgastemperatur, sowie der Druck der Druckluft vor der der Zweistoffdüse 5. Der Druck vor der Zweistoffdüse 5 ist ein Maß für den durchgesetzten Luftvolumenstrom. Die Luft wird über eine Druckluftleitung und ein Rückschlagventil 8 zu der Zweistoffdüse 5 geleitet. Der Harnstoff wird in der Zweistoffdüse 5 von der Druckluft zerstäubt und dem Abgasstrom 9 zugeführt.

Zur Erfassung der Betriebsparameter Abgasmassenstrom, Luftdruck und Abgastemperatur sind angeordnet ein Sensor 11 zur Erfassung des Abgasmassenstromes, ein Drucksensor 16 zur Erfassung des Druckes der Druckluft vor der Zweistoffdüse 5, sowie ein Temperatursensor 17 zur Erfassung der Abgastemperatur im Abgasstrom 9. In einer nicht dargstellten Alternative wird ein Abgasmassenstromsignal von der Motorsteuerung bereitgestellt.

Die Messwerte der Sensoren 11, 16, 17 werden der Steuereinheit 12 zugeführt. In der Steuereinheit 12 werden die erfassten Sensordaten und Motordaten ausgewertet und es erfolgt eine Ansteuerung des Proportionalluftventils 7 und der Dosierpumpe 3 in Abhängigkeit der momentanen Betriebsdaten. Die Düsenspitze der Zweistoffdüse 5 ist im Abgasstrom 9 angeordnet. Der Harnstoff wird über die Abgasleitung zum SCR- Katalysator 10 geleitet. Hierbei verdampft ein großer Teil der Flüssigkeitströpfchen. Der Harnstoff wandelt sich in Ammoniak um. Im Katalysator 10 selbst wird mit dem Ammoniak die Stickoxydemission des Motors reduziert.

Das Rückschlagventil 8 in der Druckleitung zwischen Proportionalluftventil 7 und der Zweistoffdüse 5 verhindert, das bei eventuellen Verstopfungen der Düse 5 der Harnstoff in die Druckluftleitungen gedrückt werden kann.

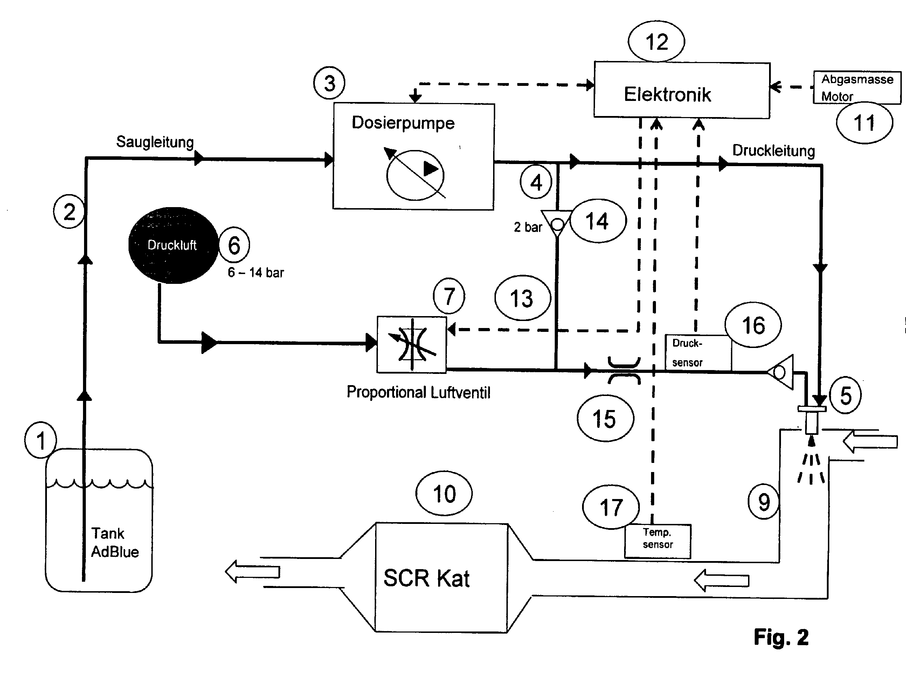

Figur 2 zeigt eine zweite Ausführungsform eines erfindungsgemäßen Dosiersystems bei dem es ohne zusätzliche aktiv betätigte Bauteile möglich ist, den Harnstoff mit der Druckluft aus der Druckleitung und der Düse auszutreiben, um in Dosierpausen den Harnstoff aus den heißen Bereichen zu entfernen, um zu verhindern, dass sich der Harnstoff bei hohen Temperaturen zersetzt und Ablagerungen bildet.

Hierbei ist die Druckluftleitung nach dem Proportionalluftventil 7 mit der Harnstoffleitung 4 über ein federbelastetes Rückschlagventil 14 mit der Leitung 13 verbunden. In die Druckluftleitung nach Proportionaldruckluftventil 7 und nach dem Abzweig der Leitung 13 ist weiterhin eine Strömungsdrossel 15 eingebaut.

Die Funktion der Strömungsdrossel 15 kann einfachstenfalls die Leitung selber übernehmen, wenn diese eine ausreichende Länge hat. Während des Dosierbetriebs liegt der Druck in der Leitung von Drossel 15 unterhalb des Öffnungsdrucks des federbelasteten Rückschlagventils 14. Die Druckluft strömt durch die Düse 5. Hierbei wird der zudosierte Harnstoff zerstäubt. Wird bei ausgeschalteter Dosierpumpe 3 der Druck nach Proportionaldruckventil 7 auf einen Wert oberhalb des Öffnungsdrucks des Rückschlagventils 14 angehoben, so strömt Luft in die Druckleitung 4 des Harnstoffs. Der Harnstoff in Leitung 4 und Düse 5 wir ausgetrieben. Hiermit ist der Bereich der Düse 5 nach Ausstellen des Motors harnstofffrei und somit frostbeständig. Im Betrieb des Motors bei hohen Abgastemperaturen ohne Dosierung können sich keine Ablagerungen bilden.

## Patentansprüche

1. Dosiersystem zur Eindüsung einer Harnstofflösung in den Abgasstrom (9) eines Verbrennungsmotors zur selektiven katalytischen Reduktion, wobei das Dosiersystem mit einem Harnstofflösungtank (1) verbindbar ist, aus dem Harnstofflösung entnehmbar ist, und wobei das Dosiersystem mit einer Druckluftversorgung (6) verbindbar ist, wobei das Dosiersystem zumindest eine Düse (5) aufweist, durch die mittels Druckluft die Harnstofflösung in den Abgasstrom (9) eindüsbar ist, wobei das Dosiersystem ein Luftventil (7) aufweist, mittels dessen der Druck und/oder die Luftmenge und/oder die Ventilöffnungszeiten der Druckluftversorgung (6) regelbar sind, und dass zwischen dem Luftventil (7) und der Düse (5) ein Sensor zur Messung des Druckes und/oder der Luftmenge in der Druckluftversorgung (6) angeordnet ist, **dadurch gekennzeichnet, dass** das Dosiersystem eine Zweistoffdüse (5) aufweist und wobei die Zweistoffdüse (5) eine außenmischende Düse ist.

2. Dosiersystem nach Anspruch 1, **dadurch gekennzeichnet, dass** es sich bei dem Luftventil (7) um ein Proportionalregelventil handelt.

3. Dosiersystem nach Anspruch 1 oder 2, **dadurch gekennzeichnet, dass** es sich bei dem Sensor um einen Drucksensor (16) handelt.

4. Dosiersystem nach einem der vorherigen Ansprüche, **dadurch gekennzeichnet, dass** das Dosiersystem Mittel zur Berechnung des Abgasmassenstromes oder einen Sensor (11) zur Messung des Abgasmassenstromes aufweist.

5. Dosiersystem nach einem der vorherigen Ansprüche, **dadurch gekennzeichnet, dass** das Dosiersystem einen Sensor (17) zur Messung der Abgastemperatur aufweist.

6. Dosiersystem nach einem der vorherigen Ansprüche, d ad u rch gekennzeichnet, dass die Druckluftversorgung (6) ein Drosselventil (15) aufweist.

7. Dosiersystem nach einem der vorherigen Ansprüche, **dadurch gekennzeichnet, dass** das Dosiersystem eine Dosierpumpe (3) zur Förderung der Harnstofflösung aufweist.

8. Dosiersystem nach einem der vorherigen Ansprüche, **dadurch gekennzeichnet, dass** zwischen einer Harnstoffleitung (4) und einer Leitung der Druckluftversorgung eine Verbindungsleitung (13) angeordnet ist, wobei die Verbindungsleitung (13) ein Rückschlagventil (14) aufweist.

9. Dosiersystem nach einem der vorherigen Ansprüche, **dadurch gekennzeichnet, dass** das Dosiersystem einen Druckluftkompressor aufweist.

10. Dosiersystem nach einem der vorherigen Ansprüche, **dadurch gekennzeichnet, dass** das Dosiersystem ein Steuergerät (12) aufweist, mittels dessen das Luftventil (7) und/oder ein Drosselventil (15) und/oder eine Dosierpumpe (3) und/oder ein Druckluftkompressor in Abhängigkeit der von dem/den Sensor/en (11, 16, 17) erfassten Messwerte/n steuerbar ist.

11. Dosiersystem nach einem der vorherigen Ansprüche, **dadurch gekennzeichnet, dass** das Dosiersystem einen Harnstofflösungtank (1) aufweist.

12. Verfahren zur Steuerung der Eindüsung einer Harnstofflösung mittels Druckluft in den Abgasstrom (9) eines Verbrennungsmotors zur selektiven katalytischen Reduktion, **dadurch gekennzeichnet, dass** die zur Zerstäubung der Harnstofflösung zugeführte Druckluftmenge in jedem Betriebspunkt in Abhängigkeit der Betriebsparameter Abgastemperatur und Abgasmassenstrom gesteuert und auf die jeweils erforderliche Mindestluftmenge abgesenkt wird, sodass die Tröpfchenqualität der eingedüsten Harnstofflösung für die Wirkung des Katalysators ausreicht.

13. Verfahren nach Anspruch 12, **dadurch gekennzeichnet, dass** bei Unterbrechung oder Beendigung der Eindüsung von Harnstofflösung die Harnstofflösung führenden Leitungen mittels Druckluft von der Harnstofflösung gereinigt werden.

14. Verfahren nach Anspruch 12 oder 13, **dadurch gekennzeichnet, dass** eine Unterbrechung oder Beendigung der Eindüsung von Harnstofflösung durch Abschaltung einer Dosierpumpe (3) erfolgt.

15. Verfahren nach einem der Ansprüche 12 bis 14, **dadurch gekennzeichnet, dass** eine Ansteuerung zumindest einer Dosierpumpe (3) und/oder zumindest eines Druckluftkompressors und/oder zumindest eines Luftregelventiles (7) in Abhängigkeit der Betriebsparameter Abgastemperatur und Abgasmassenstrom erfolgt.

## Claims

1. Metering system for injecting a urea solution into the exhaust gas flow (9) of an internal combustion engine for selective catalytic reduction, it being possible for the metering system to be connected to a urea solution tank (1) from which urea solution can be taken, and it being possible for the metering system to be connected to a compressed air supply (6), the metering system having at least one nozzle (5) through which the urea solution can be injected into the exhaust gas flow (9) by means of compressed air, the metering system having an air valve (7), by means of which the pressure and/or the amount of air and/or the valve opening times of the compressed air supply (6) can be regulated, and a sensor for measuring the pressure and/or the amount of air in the compressed air supply (6) being arranged between the air valve (7) and the nozzle (5), **characterised in that** the metering system has a binary nozzle (5), the binary nozzle (5) being an external mix nozzle.

2. Metering system according to claim 1, **characterised in that** the air valve (7) is a proportional control valve.

3. Metering system according to either claim 1 or claim 2, **characterised in that** the sensor is a pressure sensor (16).

4. Metering system according to any of the preceding claims, **characterised in that** the metering system has means for calculating the exhaust gas mass flow or a sensor (11) for measuring the exhaust gas mass flow.

5. Metering system according to any of the preceding claims, **characterised in that** the metering system has a sensor (17) for measuring the exhaust gas temperature.

6. Metering system according to any of the preceding claims, **characterised in that** the compressed air supply (6) has a butterfly valve (15).

7. Metering system according to any of the preceding claims, **characterised in that** the metering system has a metering pump (3) for supplying the urea solution.

8. Metering system according to any of the preceding claims, **characterised in that** a connecting line (13) is arranged between a urea line (4) and a line for the compressed air supply, the connecting line (13) having a non-return valve (14).

9. Metering system according to any of the preceding claims, **characterised in that** the metering system has an air compressor.

10. Metering system according to any of the preceding claims, **characterised in that** the metering system has a control device (12), by means of which the air valve (7) and/or a butterfly valve (15) and/or a metering pump (3) and/or an air compressor can be controlled based on the measured value(s) recorded by the sensor(s) (11, 16, 17).

11. Metering system according to any of the preceding claims, **characterised in that** the metering system has a urea solution tank (1).

12. Method for controlling the injection of a urea solution, by means of compressed air, into the exhaust gas flow (9) of an internal combustion engine for selective catalytic reduction, **characterised in that** the amount of compressed air which is supplied for the atomisation of the urea solution is controlled at each operating point based on the operating parameters of exhaust gas temperature and exhaust gas mass flow, and is reduced to the minimum amount of air which is required in each case so that the droplet quality of the injected urea solution is sufficient for the action of the catalyst.

13. Method according to claim 12, **characterised in that**, when injection of the urea solution is interrupted or completed, the urea solution is cleaned from the lines carrying the urea solution by means of compressed air.

14. Method according to either claim 12 or claim 13, **characterised in that** injection of the urea solution is interrupted or completed by turning off a metering pump (3).

15. Method according to any of claims 12 to 14, **characterised in that** at least one metering pump (3) and/or at least one air compressor and/or at least one air control valve (7) is controlled based on the operating parameters of exhaust gas temperature and exhaust gas mass flow.

## Revendications

1. Système de dosage pour l'injection d'une solution d'urée dans le flux de gaz d'échappement (9) d'un moteur à combustion interne à des fins de réduction catalytique sélective, dans lequel le système de dosage peut être raccordé à un réservoir de solution d'urée (1) dont une solution d'urée peut être retirée, et dans lequel le système de dosage peut être raccordé à une alimentation d'air comprimé (6), dans lequel le système de dosage présente au moins une buse (5) par laquelle, au moyen d'air comprimé, la solution d'urée peut être injectée dans le flux de gaz d'échappement (9), dans lequel le système de dosage présente une soupape à air (7) au moyen duquel la pression et/ou la quantité d'air et/ou les temps d'ouverture de soupape de l'alimentation d'air comprimé (6) peut ou peuvent être réglés et un capteur pour mesurer la pression et/ou la quantité d'air dans l'alimentation d'air comprimé (6) est aménagé entre la soupape à air (7) et la buse (5), **caractérisé en ce que** le système de dosage présente une buse binaire (5) et dans lequel la buse binaire (5) est une buse de mélange externe.

2. Système de dosage selon la revendication 1, **caractérisé en ce que** la soupape à air (7) est une soupape à régulation proportionnelle.

3. Système de dosage selon la revendication 1 ou la revendication 2, **caractérisé en ce que** le capteur est un capteur de pression (16).

4. Système de dosage selon l'une quelconque des revendications précédentes, **caractérisé en ce que** le système de dosage présente des moyens permettant de calculer le flux massique de gaz d'échappement ou un capteur (11) pour mesurer le flux massique de gaz d'échappement.

5. Système de dosage selon l'une quelconque des revendications précédentes, **caractérisé en ce que** le système de dosage présente un capteur (17) pour mesurer la température des gaz d'échappement.

6. Système de dosage selon l'une quelconque des revendications précédentes, **caractérisé en ce que** l'alimentation d'air comprimé (6) présente une soupape d'étranglement (15).

7. Système de dosage selon l'une quelconque des revendications précédentes, **caractérisé en ce que** le système de dosage présente une pompe de dosage (3) pour acheminer la solution d'urée.

8. Système de dosage selon l'une quelconque des revendications précédentes, **caractérisé en ce que** l'on aménage entre une conduite d'urée (4) et une conduite de l'alimentation d'air comprimé une conduite de raccordement (13), dans lequel la conduite de raccordement (13) présente un clapet antiretour (14).

9. Système de dosage selon l'une quelconque des revendications précédentes, **caractérisé en ce que** le système de dosage présente un compresseur à air comprimé.

10. Système de dosage selon l'une quelconque des revendications précédentes, **caractérisé en ce que** le système de dosage présente un appareil de commande (12) au moyen duquel la soupape à air (7) et/ou une soupape d'étranglement (15) et/ou une pompe de dosage (3) et/ou un compresseur air comprimé peut ou peuvent être commandés en fonction d'une ou plusieurs valeurs de mesure détectées par le ou les capteurs (11, 16, 17).

11. Système de dosage selon l'une quelconque des revendications précédentes, **caractérisé en ce que** le système de dosage présente un réservoir de solution d'urée (1).

12. Procédé de commande de l'injection d'une solution d'urée au moyen d'air comprimé dans le flux de gaz d'échappement (9) d'un moteur à combustion interne à des fins de réduction catalytique sélective, **caractérisé en ce que** la quantité d'air comprimé acheminée pour pulvériser la solution d'urée à chaque instant de fonctionnement est commandée en fonction des paramètres de fonctionnement, à savoir la température des gaz d'échappement et le flux massique des gaz d'échappement, et est réduite à la quantité d'air minimale respectivement requise de sorte que la qualité des gouttelettes de la solution d'urée injectée suffise à l'action du catalyseur.

13. Procédé selon la revendication 12, **caractérisé en ce que**, lors de l'interruption ou à la fin de l'injection de la solution d'urée, les conduites acheminant la solution d'urée sont nettoyées de la solution d'urée au moyen d'air comprimé.

14. Procédé selon la revendication 12 ou la revendication 13, **caractérisé en ce qu'**une interruption ou la fin de l'injection de solution d'urée se fait par arrêt d'une pompe de dosage (3).

15. Procédé selon l'une quelconque des revendications 12 à 14, **caractérisé en ce qu'**une commande au moins d'une pompe de dosage (3) et/ou au moins d'un compresseur à air comprimé et/ou au moins d'une soupape de régulation d'air (7) se fait ou se font en fonction des paramètres de fonctionnement, à savoir la température des gaz d'échappement et le flux massique de gaz d'échappement.
